# EUROPEAN PATENT SPECIFICATION

(11) **EP 2 809 093 B1**
(45) Date of publication and mention of the grant of the patent: **17.04.2019**
(21) Application number: 14153367.9
(22) Date of filing: 31.01.2014
(51) Int. Cl.: H04W 4/14, H04W 4/90

(54) **Apparatuses and methods for providing emergent short message services (sms)**
Vorrichtungen und Verfahren zur Bereitstellung eines vorrangigen Kurznachrichtendienstes (SMS)
Appareils et procédés pour fournir des SMS émergents

(30) Priority: 29.05.2013 US 201361828192 P; 20.01.2014 US 201414159103
(43) Date of publication of application: 03.12.2014
(73) Proprietor: Acer Incorporated, Taipei County 221 (TW)
(72) Inventor: Cheng, Tsung-Yo, Hsichih, New Taipei City 221 (TW)
(74) Representative: 2K Patentanwälte Blasberg Kewitz & Reichel

(56) References cited:
- WO-A1-2012/151901
- DE-U1-202004 008 172
- US-A1- 2007 032 252
- "Digital cellular telecommunications system (Phase 2+); Universal Mobile Telecommunications System (UMTS); Technical realization of Short Message Service (SMS) (3GPP TS 23.040 version 7.0.1 Release 7); ETSI TS 123 040", IEEE, LIS, SOPHIA ANTIPOLIS CEDEX, FRANCE, vol. 3-T2, no. V7.0.1, 1 March 2007 (2007-03-01), XP014037705, ISSN: 0000-0001

## Description

### BACKGROUND OF THE INVENTION

### Field of the Invention

The invention generally relates to provision of Short Message Service (SMS), and more particularly, to apparatuses and methods for providing emergent SMS.

### Description of the Related Art

With growing demand for ubiquitous computing and networking, various cellular technologies, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced technology, and Time- Division LTE (TD-LTE) technology, etc., have been developed for mobile telecommunication.

One of the most popular mobile telecommunication services is the Short Message Service (SMS). SMS is a communications protocol that allows for point-to-point communication of short text messages to and from Mobile Stations (MSs), such as smartphones, panel Personal Computers (PCs), laptop computers with wireless functionality, etc. Within the SMS service, a short message may be transmitted from the sender MS to a Short Message Service Center (SMSC) in a store-and-forward transport mechanism. The SMSC attempts to deliver the short message to the receiver MS. If the receiver MS is not reachable at a given moment, the SMSC will store the short message for subsequent delivery. Later, when the receiver MS is reachable, the SMSC retries the delivery process. Thus, the SMS service allows an active subscriber unit, i.e., an MS, to transmit and receive a short message at any time.

As convenient as it is, the SMS does not provide priority information for a particular short message. For cases in which a receiver MS receives five different short messages at one time, including one short message with information of an urgent or emergent subject matter, and four spam short messages, all of the short messages may very well be treated as equal when presented to the user of the receiver MS and the user may have to look into each of the short messages to identify the urgent or emergent one. In a relevant prior art, WO 2012/151901 A1 (ZTE CORP [CN]; WANG JUN [CN]), published on 15 November, 2012, an alerting method is provided. The alerting method includes: sending end configuring an alerting short message and sending the same to a receiving end, with the alerting short message including an alerting short message header and alerting short message content (S101); and the receiving end parsing the alerting short message after receiving the same and starting up an alerting function (S102). Also provided are an alerting system, a sending end, and a receiving end. By way of the present invention, the alerting short message is sent by way of the extension of the transport layer user data header indicator (TP-UD HI) in the short message header of the short message protocol, the terminal which supports the parsing of this newly added protocol header receives this type of short message, directly displays the same, prompts a special ringing vibration, and stores the same therein, and this event is of the highest priority and cannot be interrupted by other events, ensuring that the user acquires the alerting prompt within the shortest possible time. In another relevant prior art, DE 20 2004/008172 U1 (SMARTPHONE SOLUTIONS GMBH [DE]), published on 29 July, 2004, A mobile telephone is provided, which has a memory for storing telephone numbers for triggering the alarm, an analyzer analyzes an incoming message for the presence of an alarm message. The alarm message has a part identifying it as such and a sender code corresponding to an alarm trigger telephone number stored in the memory. The mobile telephone further includes a first alarm generator and/or a second alarm generator. Activation of one of these only occurs when an alarm message is present. The first alarm generator is an acoustic generator for outputting a tone signal. The second alarm generator is an optical display. In yet another relevant prior art, 3GPP TS 23.040, v7.0.1, release 7, published on 01 March, 2007, a technical specification for realization of Short Message Service (SMS) is provided, which specifies the services and service elements, the network architecture, the Service Centre functionality, the SMS Router functionality, the MSC functionality, the SGSN functionality, the routing requirements, and the protocols and protocol layering. In still another relevant prior art, US 2007/032252 A1 (YANG CHUN-CHIEH [TW]), published on 08 February, 2007, a method for remote controlling a wireless communication device by a message is provided. The method includes the following steps: the wireless communication device receives a message; and the wireless communication device executes a corresponding operation according to the data stored in the TP-User-Data (TP-UD) field or the data stored in the TP-Protocol-Identifier (TP-PID) field. A user can control the wireless communication device to perform functions like increasing volume or switching from a silent mode to a sound mode, or even switching the mobile phone off, through transmitting a text message to the mobile phone.

### BRIEF SUMMARY OF THE INVENTION

In order to solve the aforementioned problem, the invention proposes an emergent SMS which allows the user at the sender's end to configure a short message as emergent, so that the short message may be prioritized at the receiver's end.

In one aspect of the invention, a sender MS for providing emergent SMS is provided. The sender MS comprises a wireless module and a controller module. The wireless module performs wireless transmission and reception to and from a service network. The controller module configures a short message as emergent by a user command, and transmits the short message to the service network via the wireless module to be forwarded to a receiver MS, so that, when the receiver MS receives the short message, a user of the receiver MS is alerted about that the short message is configured as emergent.

In another aspect of the invention, a receiver MS for providing emergent SMS is provided. The receiver MS comprises a wireless module and a controller module. The wireless module performs wireless transmission and reception to and from a service network. The controller module receives a short message from the service network via the wireless module, determines whether the short message is configured as emergent, and if so, alerts a user of the receiver MS about that the short message is configured as emergent.

In yet another aspect of the invention, a method for providing emergent SMS between a sender MS and a receiver MS is provided. The method comprises the steps of: configuring, by the sender MS, a short message as emergent by a user command; transmitting the short message from the sender MS to the receiver MS via a service network; and alerting, by the receiver MS, a user of the receiver MS about that the short message is configured as emergent, when the receiver MS receives the short message.

Other aspects and features of the invention will become apparent to those with ordinary skill in the art upon review of the following descriptions of specific embodiments of the sender MS, the receiver MS, the method for providing emergent SMS.

### BRIEF DESCRIPTION OF DRAWINGS

The invention can be more fully understood by reading the subsequent detailed description and examples with references made to the accompanying drawings, wherein:
Fig. 1 is a block diagram of a mobile telecommunication environment according to an embodiment of the invention;
Fig. 2 is a block diagram illustrating an MS according to an embodiment of the invention;
Fig. 3 is a flow chart illustrating the method for providing emergent SMS between a sender MS and a receiver MS according to an embodiment of the invention;
Fig. 4A is a schematic diagram showing a smartphone alert with an audible notification according to an embodiment of the invention;
Fig. 4B is a schematic diagram showing a smartphone alert with a vibrating notification according to an embodiment of the invention;
Fig. 4C is a schematic diagram showing a smartphone alert with a lighting notification according to an embodiment of the invention; and
Fig. 4D is a schematic diagram showing a smartphone alert with an alarm icon according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The 3rd Generation Partnership Project (3GPP) specifications are used to teach the spirit of the invention, and the invention is not limited thereto.

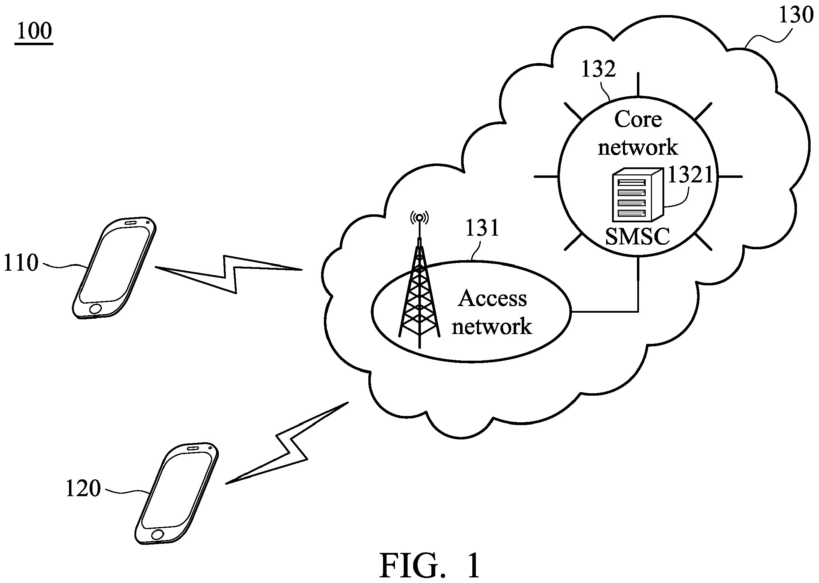

Fig. 1 is a block diagram of a mobile telecommunication environment according to an embodiment of the invention. The mobile telecommunication environment 100 comprises two MSs 110 and 120, and a service network 130, wherein the MSs 110 and 120 are wirelessly connected to the service network 130 for obtaining wireless services, including voice and/or data services, and SMS. Each of the MSs 110 and 120 may be a smartphone, a panel PC, a laptop computer, or any computing device supporting at least the cellular technology utilized by the service network 130. The service network 130 may be a GSM system, GPRS system, WCDMA system, CDMA-2000 system, TD-SCDMA system, WiMAX system, LTE system, LTE-Advanced system, or TD-LTE system, etc., depending on the cellular technology in use. The service network 130 comprises at least an access network 131 and a core network 132, wherein the access network 131 is responsible for processing radio signals, terminating radio protocols, and connecting the MSs 110 and 120 with the core network 132, and the core network 132 is responsible for performing mobility management, network-side authentication, and interfaces with public networks. The access network 131 comprises at least a base station 1311 for providing the functionality of wireless transceiving for the service network 130. Alternatively, the access network 131 may further comprise a base station controller for controlling the operation of the base station, or the base station controller may be incorporated into the base station 1311. The core network 132 comprises at least an SMSC 1321 for storing and forwarding short messages.

For example, if the service network 130 is a GSM/GPRS/EDGE/WCDMA system, the access network 131 may be a Base Station Subsystem (BSS) which includes at least a Base Transceiver Station (BTS) and a Base Station Controller (BSC), and the core network 132 may be a GPRS core which includes a Home Location Register (HLR), at least one Serving GPRS Support Node (SGSN), at least one Gateway GPRS Support Node (GGSN), and the SMSC 1321. Alternatively, if the service network 130 is an LTE/LTE-Advanced system, the access network 131 may be an Evolved-UTRAN (E-UTRAN) which includes at least an evolved NB (eNB), and the core network 132 may be an Evolved Packet Core (EPC) which includes a Home Subscriber Server (HSS), Mobility Management Entity (MME), Serving Gateway (S-GW), Packet Data Network Gateway (PDN-GW or P-GW), and the SMSC 1321.

In another embodiment, each of the MSs 110 and 120 may be wirelessly connected to a respective service network, and the SMSC may be separated from the service networks and established on the Internet through which the service networks are connected thereto.

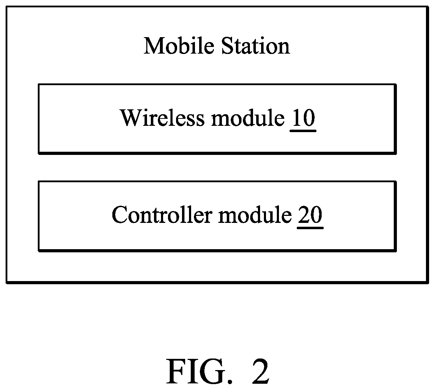

Fig. 2 is a block diagram illustrating an MS according to an embodiment of the invention. An MS comprises at least a wireless module 10, and a controller module 20. The wireless module 10 is responsible for performing the functionality of wireless transmission and reception to and from the service network 130. The controller module 20 is responsible for controlling the operations of the wireless module 10, and other functional components (not shown), such as a display unit and/or keypad serving as the Man-Machine Interface (MMI), a storage unit storing the program codes of applications or communication protocols, a Global Positioning System (GPS) unit for obtaining location information, an audio speaker, a lighting unit for emitting visible and/or colorful lights, a vibrator, or others. Also, the controller module 20 controls the wireless module 10 for performing the method for providing emergent SMS.

To further clarify, the wireless module 10 may be a Radio Frequency (RF) unit, and the controller module 20 may be a general-purpose processor or a Micro Control Unit (MCU) of a baseband unit (not shown). The baseband unit may contain multiple hardware devices to perform baseband signal processing, including analog-to-digital conversion (ADC)/digital-to-analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 900MHz, 1800MHz, or 1900MHz utilized in the GPRS/GPRS/EDGE technology, or 900MHz, 1900MHz, or 2100MHz utilized in WCDMA technology, or 900MHz, 2100MHz, or 2.6GHz utilized in LTE/LTE-Advanced technology, or others depending on the cellular technology in use.

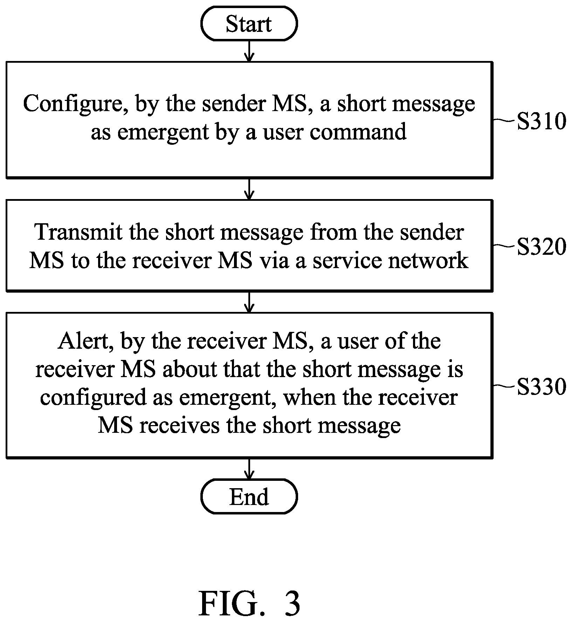

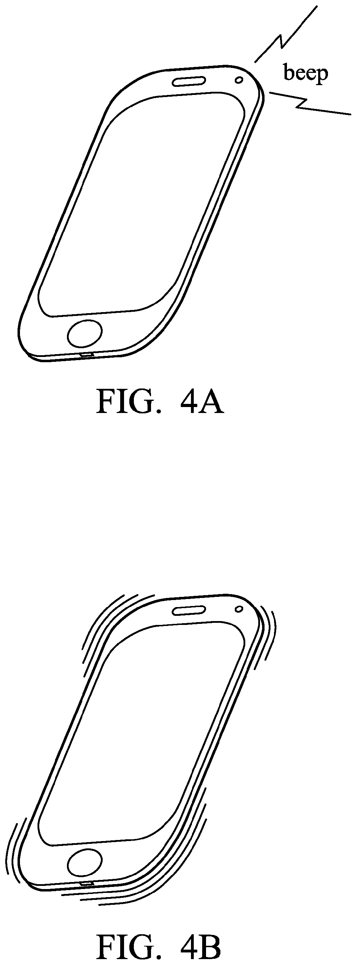

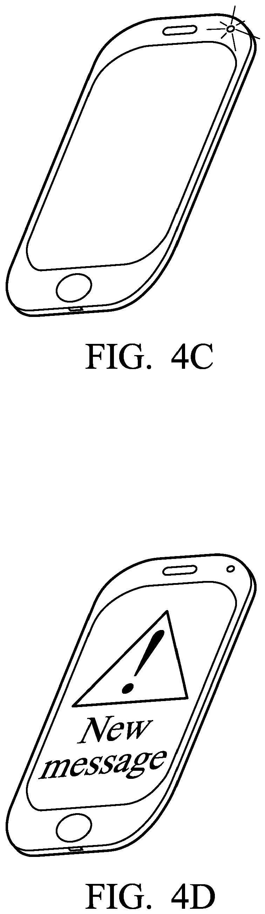

Fig. 3 is a flow chart illustrating the method for providing emergent SMS between a sender MS and a receiver MS according to an embodiment of the invention. To begin, the sender MS configures a short message as emergent by a user command (step S310). Next, the short message is transmitted from the sender MS to the receiver MS via a service network (step S320). Specifically, the emergent SMS between the sender MS and the receiver MS is provided via the service network which includes at least an SMSC for storing and forwarding short messages. After that, when the receiver MS receives the short message, the receiver MS alerts its user about that the short message is configured as emergent (step S330). Specifically, the receiver MS may provide an audible notification (e.g., beep, as shown in Fig. 4A), vibrating notification (e.g., vibrating the receiver MS, as shown in Fig. 4B), or lighting notification (e.g., flashes of visual and/or colorful lights, as shown in Fig. 4C), or displaying an alarm icon (e.g., exclamation, star, or flag sign, as shown in Fig. 4D), to alert the user about that the short message is configured as emergent and should be prioritized over the other normal short messages, i.e., the short messages configured as non-emergent. In one embodiment, the receiver MS may determine whether the received short message is configured as emergent or urgent, and only alert the user when the received short message is configured as emergent or urgent.

In one embodiment for step S310, the sender MS may add the emergency information in the TP(Transfer layer Protocol)-Protocol-Identifier (TP-PID) of the short message, to configure the short message as emergent. For cases in which the SMS service is provided in compliance with the 3GPP Technical Specification (TS) 23.040, the TP-PID is one octet, i.e., 8 bits, long and the emergency information may be added to bits 5 to 0 of the TP-PID. For example, when bit 7 and bit 6 of the TP-PID are set to '0' and '1', respectively, the use of the short message is defined by the value of bits 5 to 0, and the value of bits 5 to 0 may be set to any of the reserved binary values, e.g., '001001', to indicate "User-Defined Emergent SMS". In response to the configuration, the receiver MS may determine whether the short message is configured as emergent according to the value of the TP-PID of the short message.

In another alternative approach for step S310, the sender MS may add the emergency information in the TP-User-Data (TP-UD) of the short message, to configure the short message as emergent. For the case where the SMS service is provided in compliance with the 3GPP TS 23.040, the emergency information may be added to any Information Element Identifier (IEI) in the TP-UD. For example, an IEI may be set to the any of the reserved hexadecimal values, e.g., "02", to indicate "User-Defined Emergent SMS". Alternatively, when an IEI is set to the hexadecimal value "01", which indicates "Special SMM Message Indication", the detailed indication is further defined by bits 4 to 2 of the Information Element Data (IED) corresponding to the IEI, in the TP-UD, and bits 4 to 2 of the IED in the TP-UD may be set to any of the unused binary values, e.g., "010", to indicate "User-Defined Emergent SMS". In response to the configuration, the receiver MS may determine whether the short message is configured as emergent according to the value of the IEI in the TP-UD, or according to the value of bits 4 to 2 of the IED in the TP-UD.

It is to be understood that, the detailed description of the data structure of a short message is omitted herein for brevity since it is beyond the scope of the invention, and reference may be made to the 3GPP TS 23.040.

While the invention has been described by way of example and in terms of preferred embodiment, it is to be understood that the invention is not limited thereto. Those who are skilled in this technology can still make various alterations and modifications. For example, the term "SMS" used in the invention encompasses all short-message-based services, including SMS, Enhanced Messaging Service (EMS), and Multimedia Messaging Service (MMS). Therefore, the scope of the invention shall be defined and protected by the following claims and their equivalents.

## Claims

1. A sender Mobile Station, MS, (110) for providing emergent Short Message Services, SMS, comprising:
a wireless module (10) performing wireless transmission and reception to and
from a service network (130); and
a controller module (20) configuring a short message as emergent by a user command, and transmitting the short message to the service network (130) via the wireless module (10) to be forwarded to a receiver MS (120), so that, when the receiver MS (120) receives the short message, a user of the receiver MS (120) is alerted about that the short message is configured as emergent: **characterized by** that
the short message is configured as emergent by adding emergency information to bits 5 to 0 in a Transfer layer Protocol- Protocol Identifier, TP-PID, of the short message and setting bits 7 and 6 in the TP-PID to 0 and 1, respectively, and the emergency information is added to the bit range 001000-011101 of bits 0-5.

2. The sender MS (110) of claim 1, wherein the user is alerted by at least one of the following from the receiver MS (120):
an audible notification;
a vibrating notification;
a lighting notification; and
an alarm icon.

3. A receiver Mobile Station, MS, (120) for providing emergent Short Message Services, SMS, comprising:
a wireless module (10) performing wireless transmission and reception to and from a service network; and
a controller module (20) receiving a short message from the service network. (130) via the wireless module (10), determining whether the short message is configured as emergent, and if so, alerting a user of the receiver MS (120) about that the short message is configured as emergent; **characterized by** that
the short message is determined to be configured as emergent when bits 5 to 0 in a Transfer layer Protocol-Protocol-Identifier, TP-PID, of the short message and setting bits 7 and 6 in the TP-PID to 0 and 1, respectively, and the emergency information is added to the bit range 001000-011101 of bits 0-5.

4. The receiver MS (120) of claim 3, wherein the alerting of the user of the receiver MS comprises at least one of the following:
providing an audible notification;
providing a vibrating notification;
providing a lighting notification; and
displaying an alarm icon.

5. A method for providing emergent Short Message Services, SMS, between a sender Mobile Station (100), MS, and a receiver MS, comprising:
Configuring (310), by the sender MS, a short message as emergent by a user command;
transmitting (320) the short message from the sender MS (110)to the receiver MS (120) via a service network (130); and
alerting (330), by the receiver MS (120), a user of the receiver MS (120) about that
the short message is configured as emergent, when the receiver MS (120)
receives the short message;
the method is **characterized by** that
the short message is configured as emergent by adding emergency information to bits 5 to 0 in a Transfer layer Protocol -Protocol-Identifier, TP-PID, of the short message and setting bits 7 and 6 in the TP-PID to 0 and 1, respectively, and the emergency infomrmation is added to the bit range 001000-011101 of bits 0-5.

6. The method of claim 5, wherein the alerting of the user of the receiver MS comprises at least one of the following:
providing an audible notification;
providing a vibrating notification;
providing a lighting notification; and
displaying an alarm icon.

7. The method of claim 5 or 6, further comprising:
determining, by the receiver MS, whether the short message is configured as emergent when the receiver MS receives the short message.

8. The method of claim 7, wherein the receiver MS determines whether the TP-PID of the short message comprises the emergency information, for the determining of whether the short message is configured as emergent.

## Patentansprüche

1. Sender-Mobilstation, MS, (110) zum Bereitstellen von emergenten Kurznachrichtendiensten, SMS, umfassend:
ein drahtloses Modul (10), das drahtloses Senden und Empfangen zu und von einem Dienstnetzwerk (130) durchführt, und
ein Steuermodul (20), das eine Kurznachricht als emergent durch einen Benutzerbefehl konfiguriert und die Kurznachricht über das drahtlose Modul (10) an das Dienstnetzwerk (130) sendet, das an einen Empfänger MS (120) weitergeleitet wird, so dass, wenn die Empfänger-MS (120) die Kurznachricht empfängt, ein Benutzer des Empfänger-MS (120) darüber informiert wird, dass die Kurznachricht als emergent konfiguriert ist:
**dadurch gekennzeichnet, dass**
die Kurznachricht als emergent konfiguriert ist, indem Notfallinformationen zu den Bits 5 bis 0 in einem Übertragungsschicht-Protokoll-Protokoll-Identifikator, TP-PID, der Kurznachricht hinzugefügt und die Bits 7 und 6 in dem TP-PID auf 0 bzw. 1 gesetzt werden, und die Notfallinformationen zu dem Bitbereich 001000-011101 der Bits 0-5 hinzugefügt werden.

2. Sender-MS (110) nach Anspruch 1, wobei der Benutzer durch mindestens eines der folgenden vom Empfänger-MS (120) alarmiert wird: eine akustische Benachrichtigung; eine Vibrationsmeldung; eine Beleuchtungsmeldung; und ein Alarmsymbol.

3. Empfänger-Mobilstation, MS, (120) zum Bereitstellen von emergenten Kurznachrichtendiensten, SMS, umfassend: ein drahtloses Modul (10), das drahtloses Senden und Empfangen zu und von einem Dienstnetzwerk durchführt; und ein Steuermodul (20), das eine Kurznachricht von dem Dienstnetzwerk (130) über das drahtlose Modul (10) empfängt, und bestimmt, ob die Kurznachricht als emergent konfiguriert ist, und wenn ja, einen Benutzer der Empfanger-MS (120) darüber informiert, dass die Kurznachricht als emergent konfiguriert ist;
**dadurch gekennzeichnet, dass**
die Kurznachricht so bestimmt ist, dass sie als emergent konfiguriert ist, wenn die Bits 5 bis 0 in einem Übertragungsschicht-Protokoll-Protokoll-Identifikator, TP-PID, der Kurznachricht und den Einstellungsbits 7 und 6 in dem TP-PID auf 0 bzw. 1 gesetzt sind, und die Notfallinformationen zum Bitbereich 001000-011101 der Bits 0-5 hinzugefügt werden.

4. Empfänger MS (120) nach Anspruch 3, wobei die Alarmierung des Benutzers des Empfängers MS mindestens eine der folgenden umfasst: Bereitstellen einer akustischen Benachrichtigung, Bereitstellen einer Vibrationsmeldung; Bereitstellen einer Beleuchtungsmeldung; und Anzeigen eines Alarmsymbols.

5. Verfahren zum Bereitstellen von emergenten Kurznachrichtendiensten, SMS, zwischen einer Sender-Mobilstation (100), MS und einem Empfänger-MS, umfassend: Konfigurieren (310) einer Kurznachricht durch die Sender-MS, die durch einen Benutzerbefehl emergent ist; Übertragen (320) der Kurznachricht von der Sender-MS (110) an die Empfänger-MS (120) über ein Dienstnetzwerk (130); und Alarmieren (330) eines Benutzers der Empfänger-MS (120) durch die Empfänger-MS (120) darüber, dass die Kurznachricht als emergent konfiguriert ist, wenn die Empfänger-MS (120) die Kurznachricht empfängt; das Verfahren **dadurch gekennzeichnet ist, dass** die Kurznachricht durch Hinzufügen von Notfallinformationen zu den Bits 5 bis 0 in einem Übertragungsschicht-Protokoll-Protokoll-Identifikator, TP-PID, der Kurznachricht und Setzen der Bits 7 und 6 in dem TP-PID auf 0 bzw. 1 als emergent konfiguriert ist, und die Notfallinformationen zu dem Bitbereich 001000-011101 der Bits 0-5 hinzugefügt werden.

6. Verfahren nach Anspruch 5, wobei die Alarmierung des Benutzers der Empfänger-MS mindestens eines der folgenden umfasst: Bereitstellen einer akustischen Benachrichtigung; Bereitstellen einer Vibrationsmeldung; Bereitstellen einer Beleuchtungsmeldung; und Anzeigen eines Alarmsymbols.

7. Verfahren nach Anspruch 5 oder 6, ferner umfassend: Bestimmen, durch die Empfänger-MS, ob die Kurznachricht als emergent konfiguriert ist, wenn die Empfänger-MS die Kurznachricht empfängt.

8. Verfahren nach Anspruch 7, wobei die Empfänger-MS bestimmt, ob die TP-PID der Kurznachricht die Notfallinformation umfasst, um zu bestimmen, ob die Kurznachricht als emergent konfiguriert ist.

## Revendications

1. Une station mobile émettrice, MS (110) pour la fourniture de services de messages courts émergents, SMS, comprenant:
un module sans fil (10) effectuant une transmission et une réception sans fil vers et depuis un réseau de service; et
un module de contrôleur (20) configurant un message court comme émergent par une commande utilisateur, et transmettant le message court au réseau de services (130) via le module sans fil (10) pour le transmettre à une station MS réceptrice (120), de sorte que, lorsque la station MS réceptrice reçoit le message court, un utilisateur de la station MS réceptrice est avisé de ce que le message court est configuré comme étant émergent ;
**caractérisé en ce que**
le message court est configuré comme étant urgent émergent par l'ajout d'une information d'émergence aux bits 5 à 0 dans un identifiant de Protocole de Protocole de Couche de Transfert, TP-PID, du message court et en fixant les bits 7 et 6 dans le TP-PID à 0 et 1, respectivement, et l'information d'émergence est ajoutée à la plage e bit 001000-011101 aux bits 0-5.

2. La station mobile émettrice de la revendication 1, dans lequel l'utilisateur est alerté par au moins l'un des éléments suivants provenant de la station MS réceptrice:
une notification audible;
une notification vibrante;
une notification lumineuse ;
et une icône d'alarme.

3. Une station mobile réceptrice, MS, (120) pour la fourniture de services de messages courts émergents, SMS, comprenant;
un module sans fil (10) effectuant une transmission et une réception sans fil vers et depuis un réseau de service; et
un module contrôleur (20) recevant un message court du réseau de service (130) via le module sans fil (10), déterminant si le message court est configuré comme étant émergent et, le cas échéant, pour alerter un utilisateur de la station MS destinataire que le message court est configuré comme étant émergent.
**caractérisé en ce que**
le message court est configuré comme étant urgent émergent lorsque les bits 5 à 0 dans un identifiant de Protocole de Protocole de Couche de Transfert, TP-PID, du message court et en fixant les bits 7 et 6 au sein du TP-PID à 0 et 1, respectivement, et l'information d'émergence est ajoutée à la plage e bit 001000-011101 aux bits 0-5.

4. La MS réceptrice de la revendication 3, dans laquelle l'alerte de l'utilisateur de la MS réceptrice comprend au moins l'un des éléments suivants:
fournir une notification audible;
fournir une notification vibrante;
fournir une notification lumineuse ; et
afficher une icône d'alarme.

5. Un procédé pour fournir des services de messages courts émergents, SMS, entre une station mobile émettrice (100), MS, et une MS réceptrice, comprenant les étapes consistant à :
configurer (310) au moyen de la MS émettrice, un message court comme étant émergeant via une commande utilisateur;
transmettre (320) le message court depuis la MS émettrice (110) à la MS réceptrice (120) via un réseau de service (130); et
alerter (330), par la MS réceptrice (120), un utilisateur de la MS réceptrice (120) de ce que le message court est configuré comme étant émergent, lorsque la MS réceptrice (120) reçoit le message court ;
le procédé étant **caractérisé en ce que**
le message court est configuré comme étant émergeant par l'ajout d'information d'émergence aux bits 5 à 0 dans un identifiant de Protocole d'un Protocole de couche de transfert, TP-PID, du message court, et en fixant les bits 7 et 6 dans le TP-PID à 0 et 1, respectivement, et l'information d'émergence est ajouté à la gamme de bit 001000-011101 des bits 0-5.

6. Le procédé de la revendication 5, dans lequel l'alerte de -l'utilisateur de la MS réceptrice comporte au moins l'un des suivants :
fournir une notification audible;
fournir une notification vibrante;
fournir une notification lumineuse ; et
afficher une icône d'alarme.

7. Le procédé de la revendication 5 ou 6, comprenant en outre :
la détermination, par la MS réceptrice, de ce que le message court est configuré comme étant émergent lorsque la MS réceptrice reçoit le message court.

8. Le procédé de la revendication 7, dans lequel la MS réceptrice détermine si le TP-PID du message court comporte l'information d'émergence, pour déterminer le fait de savoir si le message court est configuré comme étant émergent.
